# EUROPÄISCHE PATENTSCHRIFT

(11) **EP 2 961 674 B1**
(45) Veröffentlichungstag und Bekanntmachung des Hinweises auf die Patenterteilung: **16.08.2017**
(21) Anmeldenummer: 14719016.9
(22) Anmeldetag: 24.04.2014
(51) Int. Cl.: B65G 21/10, B65G 13/12

(54) **FÖRDEREINRICHTUNG ZUM BELADEN ODER ENTLADEN VON VEREINZELBAREM STÜCKGUT**
CONVEYOR DEVICE FOR LOADING OR UNLOADING PIECE GOODS WHICH CAN BE SINGULATED
SYSTÈME TRANSPORTEUR POUR LE CHARGEMENT OU LE DÉCHARGEMENT DE MARCHANDISES INDIVIDUALISABLES

(30) Priorität: 26.04.2013 DE 102013207642
(43) Veröffentlichungstag der Anmeldung: 06.01.2016
(73) Patentinhaber: J. Schmalz GmbH, 72293 Glatten (DE)
(72) Erfinder: MAST, Jonas, 72270 Baiersbronn (DE); SCHMIDT, Valentin, 70186 Stuttgart (DE); WOELTJE, Kay, 71093 Weil im Schoenbuch (DE); KRAUS, Werner, 70563 Stuttgart (DE)
(74) Vertreter: DREISS Patentanwälte PartG mbB
(86) Internationale Anmeldenummer: PCT/EP2014/058330
(87) Internationale Veröffentlichungsnummer: WO 2014/174005

(56) Entgegenhaltungen:
- WO-A1-2010/070686
- WO-A2-2012/088437
- JP-A- H06 171 762
- US-A1- 2007 284 214
- US-A1- 2012 097 498

## Beschreibung

Die Erfindung betrifft eine Fördereinrichtung zum Beladen oder zum Entladen von vereinzelbarem Stückgut aus einem Lagerbereich heraus oder in einen Lagerbereich herein. Derartige Fördereinrichtungen werden z.B. zum Befördern von Paketen oder Gepäckstücken unterschiedlicher Größe und/oder Form verwendet, die aus einem Lagerbereich heraus zum Weitertransport in ein anderes Transportmittel befördert werden müssen, z.B. bei Beladung und Entladung von Frachträumen von Flugzeugen. Die Stückgüter sind oftmals ungeordnet an unterschiedlichen Positionen eines Lagerraums angeordnet und müssen z.B. an ein Transportmittel weitergegeben werden oder umgekehrt von einem Transportmittel in den Lagerbereich hin eingelagert werden.

Derartige Beförderung von vereinzelbarem Stückgut ist daher schwierig zu automatisieren und erfordert oftmals dem Einsatz menschlicher Arbeitskräfte, die zwischen einem Förderband und einem Transportmittel einer Lagerungslogistik die Übergabe von unterschiedlich großem, unterschiedlich schwerem und unterschiedlich bezeichnetem Stückgut erledigen. Dies ist zeitaufwendig, personalaufwendig und fehleranfällig. Außerdem lassen sich nur begrenzte Stückzahlen pro Zeiteinheit erzielen.

Im Stand der Technik gab es daher Versuche, eine Automatisierung einer solchen Beförderung von Stückgut voranzutreiben. Beispielsweise zeigt die EP 2 156 927 B1 eine Fördereinrichtung mit einem Roboter mit drei teleskopierbaren Armen an einem vorderen freien Ende der Fördereinrichtung. Der Roboter ist an einer Art Brücke montiert, zwischen welcher ein Förderband zum Weitertransport der aufgenommenen Stückgüter verläuft. Eine solche Lösung ist jedoch im Hinblick auf die Fördergeschwindigkeit nachteilig, da die Aufnahme von Stückgut mit teleskopierbaren Armen jeweils einzeln erfolgt auf das Förderband verladen wird. Außerdem schränkt die das Förderband überspannende Brücke den Aufbau räumlich stark ein. Aus der EP 1 667 907 B1 ist eine Fördereinrichtung bekannt, umfassend ein erstes, zweites und ein drittes Fördermodul, die miteinander über eine Zwischenfördereinrichtung verbunden sind. Die dort offenbarte Fördereinrichtung betrifft eine Optimierung eines Übergangs zwischen unterschiedlichen Fördermodulen mittels einer Zwischenfördereinrichtung mit entsprechenden Mitteln für den Übergang zum Weitertransport von den Stückgütern. Eine seitliche Verstellung der Transportrichtung des Aufnahmemittels an dem vorderen freien Ende der Fördereinrichtung ist nicht beschrieben, so dass das die Fördereinrichtung tragende Fahrzeug jeweils entsprechend umpositioniert werden muss, um unterschiedlich und ungeordnet angeordnete Stückgüter aus einem Lagerraum aufnehmen zu können. In der US 2012/0097498 sowie in der US 2007/284214 A1 ist eine Fördereinrichtung mit den Merkmalen des Oberbegriffs des Anspruchs 1 beschrieben.

Der vorliegenden Erfindung liegt das Problem zugrunde, eine Fördereinrichtung für den Transport von vereinzelbarem Stückgut bereitzustellen, welche einerseits eine hohe Stückzahl von transportiertem Stückgut pro Zeiteinheit ermöglicht und andererseits eine Anpassung an ungeordnet positionierte Stückgüter in einem Lagerbereich ermöglicht.

Als Lösung für das genannte Problem wird eine Fördereinrichtung mit den Merkmalen des Anspruchs 1 vorgeschlagen. Vorteilhafte Ausgestaltungen und Weiterbildungen der Erfindung sind Gegenstand der abhängigen Ansprüche.

Gemäß der vorliegenden Erfindung wird eine Fördereinrichtung zum Beladen oder Entladen von vereinzelbarem Stückgut, wie zum Beispiel Paketen oder Gepäckstücken, aus einem Lagerbereich heraus oder in einen Lagerbereich herein mit mindestens einer Förderbandeinrichtung bereitgestellt, welche an einer mobilen oder stationären Halterung montiert ist, wobei ein Aufwälzmodul bzw. Aufnahmeelement vorgesehen ist, welches zur Aufnahme und Ablage von Stückgut im Lagerbereich eingerichtet ist. Das Aufwälzmodul bzw. Aufnahmemodul ist an einem vorderen freien Ende der Fördereinrichtung angeordnet und weist mindestens eine vorzugsweise zur horizontalen Ebene geneigten Bandrampe auf. Zwischen dem Aufwälzmodul und der Fördereinrichtung ist ein Kurvenmodul vorgesehen, mit welchem eine Richtungsänderung einer Transportrichtung mindestens in der horizontalen Ebene variabel einstellbar ist.

Diese Fördereinrichtung ermöglicht eine hohe Stückzahl pro Zeiteinheit für ein Beladen bzw. Entladen von einzelnen Stückgütern und kann flexibel an die Handhabung von unterschiedlich großen, unterschiedlich schweren und unterschiedlich geformten Elementen, wie zum Beispiel Gepäckstücken oder Paketsendungen, angepasst werden. Außerdem ist ein Einsatz unter verschiedenen räumlichen Gegebenheiten möglich, z.B. auch von ungeordnet in einem Lagerbereich vorgesehenen Stückgütern, die an undefinierten beliebigen Positionen im Lagerbereich liegen. Die Handhabung von vereinzelbaren Stückgütern, wie zum Beispiel Gepäckstücken oder Paketsendungen, mit der erfindungsgemäßen Fördereinrichtung wird vereinfacht und optimiert, und es lassen sich hohe Stückzahlen pro Zeiteinheit realisieren. Es ist ein fortlaufender Transport der jeweiligen Stückgüter möglich. Mittels des Aufwälzmoduls, welches an dem vorderen freien Ende der Fördereinrichtung vorgesehen ist und welches eine vorzugsweise im Verhältnis zur horizontalen Ebene geneigte Bandrampe oder mehrere derartige Bandrampen aufweist, können die Stückgüter aufgenommen oder abgelegt werden. Das Aufwälzmodul der Fördereinrichtung wird an die jeweils zu befördernden Stückgüter herangeführt und ermöglicht aufgrund der geneigten Ebene der Bandrampe ein Anheben und ein Aufnehmen des Stückguts, ohne dass aufwendige Greifer, Roboterarme oder dergleichen erforderlich sind.

Zusätzlich ist ein Kurvenmodul vorgesehen, welches zwischen dem vorderen Aufwälzmodul und der Förderbandeinrichtung bzw. dem Förderband angeordnet ist. Das Kurvenmodul ist derart ausgebildet, dass eine Änderung der Richtung hinsichtlich einer Transportrichtung der Fördereinrichtung mindestens in der horizontalen Ebene variabel einstellbar ist. Insbesondere ist das Kurvenmodul dazu eingerichtet, einen Übergang von der Transportrichtung des Aufwälzmoduls zu einer abweichenden Transportrichtung der Förderbandeinrichtung bereitzustellen.

Hierdurch kann das zur Aufnahme und zur Ablage dienende endseitige Aufwälzmodul gezielt an verschiedenartige Positionen innerhalb eines Lagerraums verfahren und entsprechend der Ausrichtung des Gepäckstücks verstellt werden. Eine manuelle Zuführung der Stückgüter durch einen Mitarbeiter im Inneren des Lagerraums ist damit nicht mehr erforderlich. Dabei ist die erfindungsgemäße Fördereinrichtung nicht auf eine einzige Ebene einer Einlagerung von Elementen beschränkt. Die horizontale Ausrichtung insbesondere des endseitigen vorderen Aufwälzmoduls ist variabel anpassbar an die verschiedenen Situationen in dem Lagerraum oder in einem Lagerbereich. Die erfindungsgemäße Fördereinrichtung ist vorteilhafterweise mit einem Kurvenmodul versehen, mit welchem eine Änderung der Transportrichtung mindestens in der horizontalen Ebene variabel verstellt werden kann. Auf diese Weise sind die Verstellmöglichkeiten der Fördereinrichtung und insbesondere des der Aufnahme und Ablage dienenden vorderen, endseitigen Aufwälzmoduls der Fördereinrichtung weiter optimiert.

Aufgrund des Kurvenmoduls, welches zwischen dem Aufwälzmodul und der dahinterliegenden Fördereinrichtung (in Richtung einer Entnahme von Stückgut) vorgesehen ist, kann die Fördereinrichtung variabel an die örtlichen Gegebenheiten angepasst werden und jeweils auf die zu transportierenden Stückgüter ausgerichtet werden. Mit der Fördereinrichtung gemäß der Erfindung wird also eine im dreidimensionalen Raum flexibel und variabel verstellbare Aufnahme- und Weiterbeförderungseinrichtung bereitgestellt.

Das Aufwälzmodul kann über Stellantriebe oder sonstige Verstellmittel in beliebige räumliche Positionen in vertikaler sowie in horizontaler Richtung frei bewegbar ausgebildet und angeordnet sein, so dass insbesondere die Anordnung in Richtung einer X-Achse, einer Y-Achse und einer Z-Achse je nach Bedarf anpassbar ist.

Das Aufwälzmodul, das Kurvenmodul und die Förderbandeinrichtung sind vorzugsweise direkt aneinander angrenzend positioniert, so dass das Stückgut jeweils übergangslos zwischen ihnen weitertransportiert werden kann. Auf diese Weise wird eine durchgängige und kontinuierliche Förderstrecke bereitgestellt. Eine Handhabung mittels zusätzlicher Greifer oder ähnlichem an dem Übergang zwischen den Abschnitten der Fördereinrichtung ist damit nicht erforderlich. Die Fördereinrichtung selbst bildet eine Art durchgängiges Transportelement, welches sowohl für ein Aufgreifen oder Ablegen von Stückgut als auch für einen gezielt ausgerichteten Weitertransport des Stückguts speziell angepasst ist.

Insbesondere ist ein erstes Kurvenmodul zwischen dem Aufwälzmodul und der Förderbandeinrichtung, sowie ein zweites Kurvenmodul zwischen der Förderbandeinrichtung und einer zweiten Förderbandeinrichtung vorgesehen. Hierdurch sind die Freiheitsgrade einer Positionierung und Bewegung der Elemente der Fördereinrichtung weiter erhöht. Mit einem zweiten Kurvenmodul lässt sich eine Transportrichtung entlang der Förderstrecke je nach Situation ändern. Die Fördereinrichtung kann daher selbst bei einer stationären Halterung in einem größeren räumlichen Bereich leicht verstellt und positioniert werden. Es können auch weitere Kurvenmodule zwischen weiteren, aufeinanderfolgenden Förderbandeinrichtungen vorgesehen sein.

Nach einer weiteren vorteilhaften Ausgestaltung der Erfindung ist die mindestens eine Förderbandeinrichtung aus mehreren parallel verlaufenden, in ihrer Lage entlang der Längserstreckung zueinander veränderbaren Förderbändern derart gebildet, dass die Länge der von den Förderbändern aufgespannten Transportfläche variabel einstellbar ist. Hierdurch wird eine Art teleskopierbare Förderbandeinrichtung bereitgestellt, deren Länge auf den jeweiligen Einsatzzweck optimal eingestellt werden kann. Je nach Bedarf kann die effektive Länge einer Transportfläche verkürzt oder verlängert werden.

Vorzugsweise sind Mittel zur Höhenverstellung der Förderbandeinrichtung vorgesehen, z.B. eine zentrale Hubsäule, an welcher die Fördereinrichtung höhenverstellbar montiert ist. Eine solche zentrale Hubsäule kann entweder stationär montiert sein oder in einer mobilen Form auf einem Fahrzeug oder ähnlichem angebracht sein. Eine seitlich positionierte Hubsäule hat den Vorteil gegenüber einer Höhenverstelleinrichtung vom Typ Portal oder Brücke, dass die Transportstrecke hinsichtlich der Größe und Höhe von beförderbarem Stückgut weitestgehend nicht beschränkt ist.

Vorzugsweise sind Mittel zur Änderung einer Transportrichtung sowohl in einer horizontalen Ebene als auch in einer vertikalen Ebene vorgesehen. Eine Verstellung der Transportrichtung in einer horizontalen Ebene erfolgt beispielsweise über eine Änderung des Krümmungsgrads eines Kurvenmoduls. Zusätzlich kann das Kurvenmodul auch zur Änderung der Transportrichtung in einer vertikalen Ebene angepasst sein, so dass ein Höhenversatz zwischen einem ersten Abschnitt und einem dahinterliegenden zweiten Abschnitt der Fördereinrichtung eingestellt werden kann. Außerdem können zu diesem Zweck auch die Förderbandeinrichtungen selbst verstellt werden, beispielsweise indem eine Neigung im Verhältnis zur horizontalen Ebene eingestellt wird.

Wenn nach einer weiteren vorteilhaften Ausgestaltung das Kurvenmodul und/oder die Förderbandeinrichtung jeweils mit mindestens zwei parallel zueinander verlaufenden und separat ansteuerbaren Förderelementen ausgebildet sind, so lassen sich die Stückgüter auf der Fördereinrichtung selbst in ihrer Ausrichtung verändern. Das Aufwälzmodul der erfindungsgemässen Fördereinrichtung weist zwei parallel zueinander verlaufende Bandrampen auf. Falls ein durch das Aufwälzmodul aufgenommenes Paket oder Gepäckstück nicht richtig zu der Längsrichtung des Aufwälzmoduls liegt, kann durch ein unterschiedliches Ansteuern der parallel verlaufenden Bandrampen des Aufwälzmoduls das Paket oder das Gepäckstück leicht in der Ausrichtung korrigiert werden. Dafür müssen lediglich die beiden Bandrampen mit unterschiedlichen Geschwindigkeiten betrieben werden, je nachdem, in welcher Richtung die Fehlausrichtung des Stückguts gegeben ist. In einem vorteilhaften Ausgestaltung ist eine solche Richtungskorrektur auch mit einem Kurvenmodul oder mit der Förderbandeinrichtung selbst möglich, wenn diese jeweils mit parallel zueinander verlaufenden und separat ansteuernden Fördermitteln versehen sind.

Das Aufwälzmodul ist vorzugsweise mittels einer Stelleinrichtung gehaltert, über welche es in mindestens zwei Richtungen gesteuert bewegbar ist. Auf diese Weise kann das Aufwälzmodul beispielsweise auch in der horizontalen Ebene verschwenkt werden. Vorzugsweise lässt sich das Aufwälzmodul auch in der vertikalen Ebene verschwenken.

Vorzugsweise weist das Kurvenmodul mehrere in Transportrichtung hintereinanderliegende Walzen auf, welche relativ zueinander verkippbar und/oder aktiv antreibbar sind, vorzugsweise unabhängig voneinander. Durch ein Verkippen der Walzen zueinander (d.h. der Drehachsen der Walzen zueinander) lässt sich der Krümmungsradius des Kurvenmoduls verstellen, um unterschiedliche Stärken einer Änderung der Transportrichtung durch das Kurvenmodul einzustellen. Die Walzen des Kurvenmoduls können alternativ oder zusätzlich auch in vertikaler Richtung relativ zueinander verstellbar angeordnet sein. Auf diese Weise lässt sich die Transportrichtung in zwei räumlichen Ebenen variabel verändern. Mittels angetriebener Walzen kann auch der Abstand zwischen zwei transportierten Stückgütern nach Bedarf verändert werden, z.B. indem verschiedene Walzen unterschiedlich schnell laufen.

Das Aufwälzmodul kann an seinem vorderen freien Ende zusätzlichen Aufnahmehilfsmittel, insbesondere in der Form von einer verschiebbaren Schippe, einer angetriebenen Trennwalze oder ähnlichem, aufweisen. Mit solchen zusätzlichen Aufnahmehilfsmitteln wird die Aufnahme von unterschiedlich geformten und unterschiedlich großen Stückgütern weiter erleichtert. Eine endseitige Schippe kann beispielsweise unter auch große Pakete geschoben werden, so dass mit dem Aufwälzmodul anschließend das Paket ohne manuelles Eingreifen eines Bedieners aufgenommen werden kann. Eine angetriebene Trennwalze kann beispielsweise in entgegengesetzter Richtung rotiert werden, so dass aufgrund der Reibung das Gepäckstück oder das Paket angehoben wird und anschließend von den Bandrampen des Aufwälzmoduls weiterbefördert werden kann. Auf diese Weise lässt sich der Vorgang eines Aufnehmens und Ablegens von Stückgut vollständig automatisch durchführen.

Vorzugsweise ist eine Steuerung zur Positionssteuerung des Aufwälzmoduls und zur Lage- und Ausrichtungssteuerung des Kurvenmoduls und der Förderbandeinrichtung vorgesehen. Die Steuerung kann beispielsweise eine zentrale Steuerung sein, über welche eine Bedienperson sämtliche Einstellungen der Fördereinrichtung zentral vornehmen kann.

Zur weiteren Ausgestaltung kann eine vorzugsweise dreidimensional wirkende Griffsteuerung mit einer Admittanzregelung vorgesehen sein. Auf diese Weise kann das Aufwälzmodul mittels der Griffsteuerung in seiner Position leicht verstellt werden und an das jeweils zu befördernde Stückgut herangeführt werden. Beispielsweise sind Kraftsensoren vorgesehen, mittels welchen auf die Griffsteuerung z.B. durch eine Bedienperson ausgeübte Kräfte detektiert werden und die Lage des Aufwälzmoduls entsprechend geändert wird. Das Aufwälzmodul kann auch an steuerbaren Achsen angeordnet sein, vorzugsweise in den drei Raumrichtungen verstellbar. Eine Steuerung kann direkt an der Fördereinrichtung (insbesondere dem Aufwälzmodul) selbst vorgesehen sein. Alternativ kann die Steuerung auch als eine fernsteuerbare Steuerung vorgesehen werden.

Im Folgenden wird die Erfindung weiter anhand der beigefügten Figuren erläutert. Es zeigen:
Fig. 1 ist eine perspektivische Ansicht eines Ausführungsbeispiels einer erfindungsgemäßen Fördereinrichtung mit einer zentralen Hubsäule;
Fig. 2 ist eine Draufsicht von oben des Ausführungsbeispiels einer Fördereinrichtung nach Fig. 1;
Fig. 3 ist eine Seitenansicht des Ausführungsbeispiels einer Fördereinrichtung gemäß der Erfindung;
Fig. 4 ist eine Vorderansicht des Ausführungsbeispiels einer Fördereinrichtung gemäß der Erfindung;
Fig. 5 ist eine perspektivische Ansicht des Ausführungsbeispiels einer Fördereinrichtung der Erfindung in einer oberen Stellung an der Hubsäule;
Fig. 6 ist eine perspektivische Ansicht des Ausführungsbeispiels einer Fördereinrichtung der Erfindung in einer unteren Stellung an der Hubsäule;
Fig. 7 ist eine perspektivische Ansicht des Ausführungsbeispiels einer Fördereinrichtung der Erfindung mit verkürzter Transportstrecke;
Fig. 8 und Fig. 9 sind Draufsichten von oben des Ausführungsbeispiels einer Fördereinrichtung der Erfindung zur Veranschaulichung der Längenverstellung der Transportstrecke; und
Fig. 10 ist eine vereinfachte Draufsicht eines Ausführungsbeispiels der Fördereinrichtung der Erfindung mit einer Griffsteuerung.

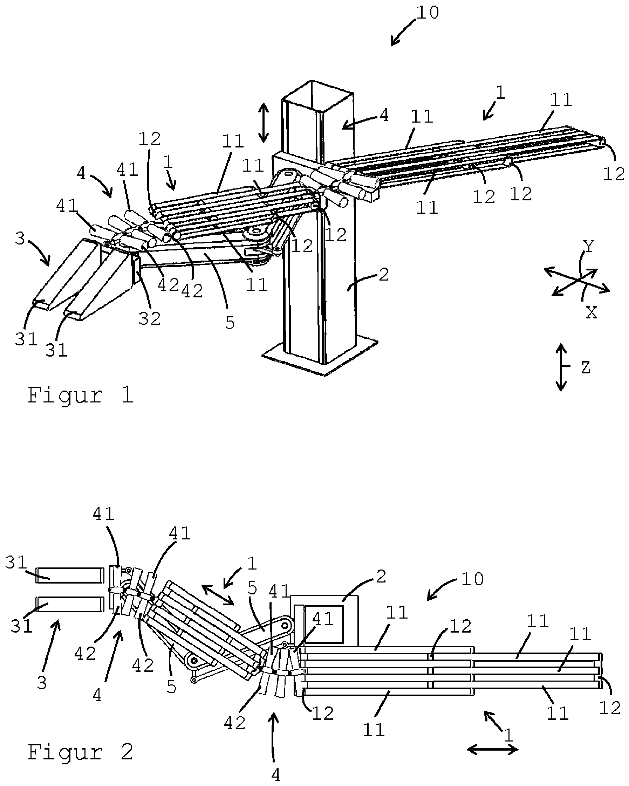

In den Fig. 1 bis 10 ist ein exemplarisches Ausführungsbeispiel einer Fördereinrichtung 10 gemäß der Erfindung in verschiedenen Positionen und Ausrichtungen in mehreren Ansichten dargestellt. Wie es in den Fig. 1 und 2 gezeigt ist, weist die Fördereinrichtung 10 grundsätzlich drei verschiedene Elemente auf, nämlich eine Förderbandeinrichtung 1, ein Kurvenmodul 4 und an dem vorderen freien Ende ein Aufwälzmodul 3. Die Fördereinrichtung 10 ist bei diesem Ausführungsbeispiel durch eine zentrale Halterung 2 getragen, welche hier als eine stationäre Hubsäule ausgebildet ist. Die Halterung 2 kann jedoch auch eine mobile Halterung sein, welche beispielsweise auf einem Fahrzeug montiert ist. Das Aufwälzmodul 3 besteht hier aus zwei parallel nebeneinander angeordneten, geneigten Bandrampen 31, die an ihrem hinteren Ende über eine Halteplatte 32 montiert sind. Die schrägen Bandrampen 31 des Aufwälzmoduls 3 sind jeweils mit umlaufenden Bändern (nicht dargestellt) gebildet, so dass ein aufgenommenes Stückgut auf das Aufwälzmodul 3 aufgezogen und weitertransportiert werden kann.

Durch die schräge, geneigte Form der Bandrampen 31 können mit dem Aufwälzmodul 3 verschiedenartige und verschieden große Gepäckstücke oder Pakete automatisch aufgenommen und abtransportiert werden. Angrenzend zu dem Aufwälzmodul 3 ist ein erstes Kurvenmodul 4 vorgesehen, welches aus nebeneinander angeordneten Walzen 41, 42 besteht. Die Walzen 41, 42 sind aktiv angetrieben, so dass das Stückgut in dem Abschnitt des Kurvenmoduls 4 weitertransportiert werden kann. Die Walzen 41, 42 sind gegeneinander verkippbar, wie es insbesondere aus der Fig. 2 gut zu erkennen ist, so dass an dem Kurvenmodul 4 eine Änderung der Transportrichtung in Richtung auf eine dahinterliegende Förderbandeinrichtung 1 in einem beliebigen Krümmungswinkel eingestellt werden kann. Auf diese Weise wird das transportierte Stückgut von dem Aufwälzmodul 3 in Richtung zu der an der Halterung 2 befestigten Förderbandeinrichtung 1 weitergeleitet. Bei diesem Ausführungsbeispiel ist ein zusätzliches zweites Kurvenmodul 4 mit Walzen 41, 42 vorgesehen, das zwischen einer ersten Förderbandeinrichtung 1 und einer zweiten Förderbandeinrichtung 1 vorgesehen ist.

Als Förderbandeinrichtung 1 sind bei diesem Ausführungsbeispiel mehrere parallel zueinander angeordnete Förderbänder 11 vorgesehen, die teleskopartig zueinander in der Länge verstellbar angebracht sind. Die Förderbänder 11 sind jeweils über endseitige Antriebswalzen 12 angetrieben. Mittels einer Verstellung der Antriebswalzen 12 lässt sich die effektive Länge des Transportwegs von jeder Förderbandeinrichtung 1 verstellen. Auf diese Weise kann die Länge der jeweiligen Förderbandeinrichtungen 1 je nach Bedarf geändert werden. Die Förderbandeinrichtung 1 wird quasi mit der Verstellbewegung des Aufwälzmoduls 3 nachgeführt, so dass in jeder Betriebssituation eine durchgängige Transportstrecke der Fördereinrichtung 10 hinter dem Aufwälzmodul 3 gegeben ist. Das Aufwälzmodul 3 ist über einen Winkelarm 5 an der Halterung 2 montiert. Mittels des Winkelarms 5 lässt sich die Lage und Position des Aufwälzmoduls 3 beliebig verändern. Mit dem Winkelarm 5 kann das Aufwälzmodul 3 sowohl seitlich verstellt werden als auch nach vorne und nach hinten ausgefahren und zurückgezogen werden. Die als Hubsäule ausgebildete Halterung 2 ist höhenverstellbar, so dass die Fördereinrichtung 10 insgesamt in der Höhe verstellt werden kann. Alternativ bzw. zusätzlich kann das Aufwälzmodul 3 über die Halteplatte 32 höhenverstellbar ausgebildet sein, so dass zusätzlich zu der Höhenverstellung über die Hubsäule das Aufwälzmodul selbst in gewissem Maße in der Höhe verstellt werden kann. Auch können die Bandrampen 31 des Aufwälzmoduls 3 gemäß diesem Ausführungsbeispiel in der Breite zueinander seitlich verstellbar sein. Auf diese Weise kann das Aufwälzmodul 3 auf unterschiedlich breite Gepäckstücke oder Pakete oder ähnliches angepasst werden. Die beiden Bandrampen 31 des Aufwälzmoduls 3 sind separat ansteuerbar, so dass die Geschwindigkeit der beiden Bandrampen 31 unterschiedlich eingestellt werden kann. Auf diese Weise können schräg aufgenommene Stückgüter an dem Aufwälzmodul 3 direkt in die korrekte Ausrichtung in Richtung der Transportrichtung verdreht werden. Auch sind hier die Walzen 41, 42 des Kurvenmoduls 4 aktiv angetrieben und separat ansteuerbar. Hierdurch kann einerseits die Umlenkung der transportierten Stückgüter durch ein unterschiedlich schnelles Betreiben der Walzen 41, 42 unterstützt werden, und andererseits kann auch hier eine Ausrichtung des transportierten Stückguts korrigiert werden.

Durch die beiden Kurvenmodule 4 und die Höhenverstellung an der Halterung 2 kann das Aufwälzmodul 3 an dem vorderen freien Ende der Fördereinrichtung beliebig im dreidimensionalen Raum verstellt werden, damit auch ungeordnet liegende Stückgüter jeweils angefahren werden können für deren Abtransport bzw. umgekehrt gezielt an eine gewünschte Stelle in einem Lagerraum abgelegt werden können. Auf diese Weise wird eine sehr flexible und variabel anpassbare Fördereinrichtung 10 bereitgestellt, welche das ein Aufnahmeelement bildende Aufwälzmodul 3 direkt mit einer dahinterliegenden Transportstrecke mittels der Kurvenmodule und der Förderbandeinrichtungen 1 kombiniert. Der Greifprozess und der Abtransport können daher in einem einzigen Vorgang ausgeführt werden. Auf diese Weise kann eine sehr hohe Stückzahl pro Zeiteinheit von Gepäckstücken oder ähnlichem befördert werden. Der Prozess ist zudem kontinuierlich, da keine Übergabe zwischen einzelnen Stationen auf manuelle oder automatisierte Art mehr erforderlich ist. Gemäß diesem Ausführungsbeispiel (Fig. 1 und 2) ist die Förderbandeinrichtung 1 in der Höhe verstellbar. Alternativ oder zusätzlich kann die Förderbandeinrichtung 1 auch in ihrer Schräge zur horizontalen Ebene verstellbar ausgebildet sein. Durch die Kurvenmodule 4 ist die vordere Förderbandeinrichtung 1 in ihrer Ausrichtung jeweils je nach Bedarf verstellbar. Zusätzlich sind beide Förderbandeinrichtungen 1 jeweils in der Länge über die teleskopförmig ineinandergreifenden Förderbänder 11 und die Antriebswalzen 12 verstellbar geformt.

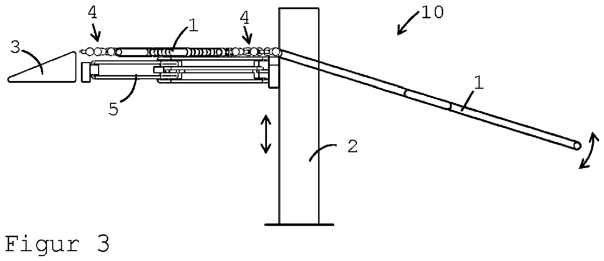

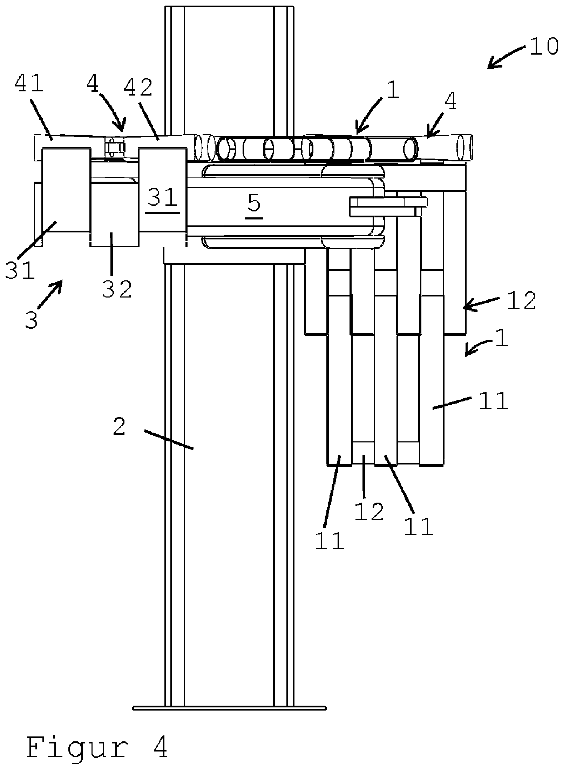

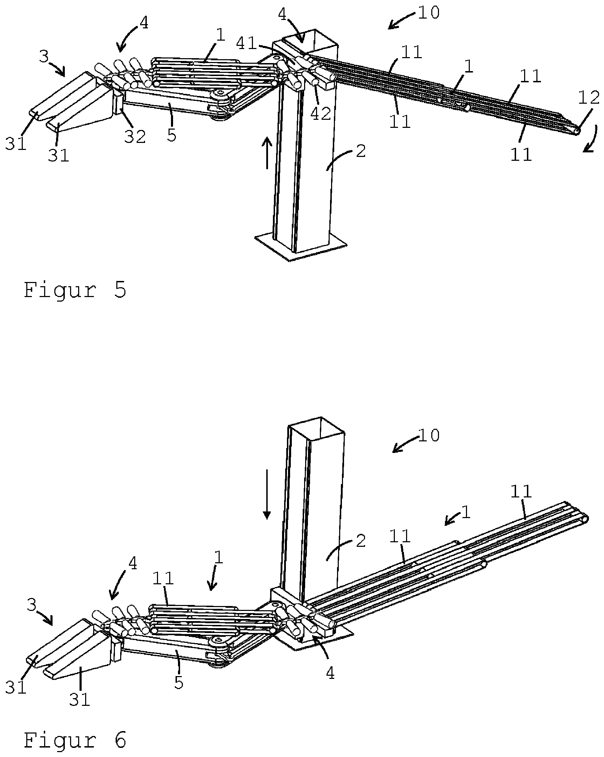

In den Fig. 3 und 4 ist die erfindungsgemäße Fördereinrichtung 10 in einer Situation dargestellt, in welcher die hintere Förderbandeinrichtung 1 von der Halterung 2 schräg nach unten verläuft, also aus der Horizontalen heraus geneigt ist. In den Fig. 5 und 6 ist die Höhenverstellung mittels der als Hubsäule ausgebildeten Halterung 2 veranschaulicht. In der Fig. 5 befindet sich die Fördereinrichtung 10 in ihrer höchsten Position, während die hintere Förderbandeinrichtung 1 schräg nach unten ausgerichtet ist. In der Fig. 6 wiederum ist die unterste Position der Fördereinrichtung 10 dargestellt, und die hintere Förderbandeinrichtung 1 liegt in der horizontalen Ebene. Alternativ kann in dieser dargestellten Situation die hintere Förderbandeinrichtung 1 auch schräg nach oben verlaufen, je nachdem, an welcher Stelle das beförderte Stückgut abzuladen ist.

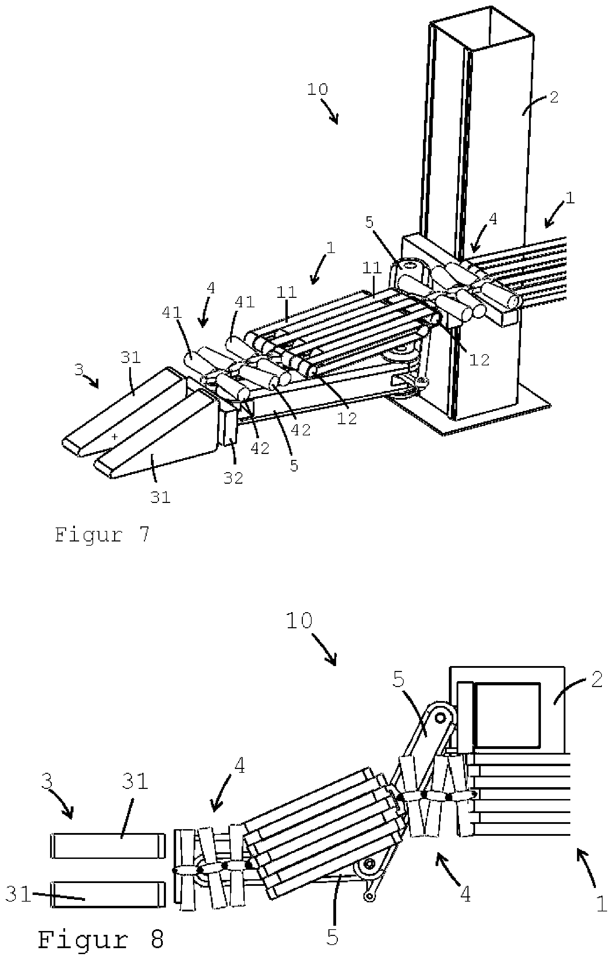

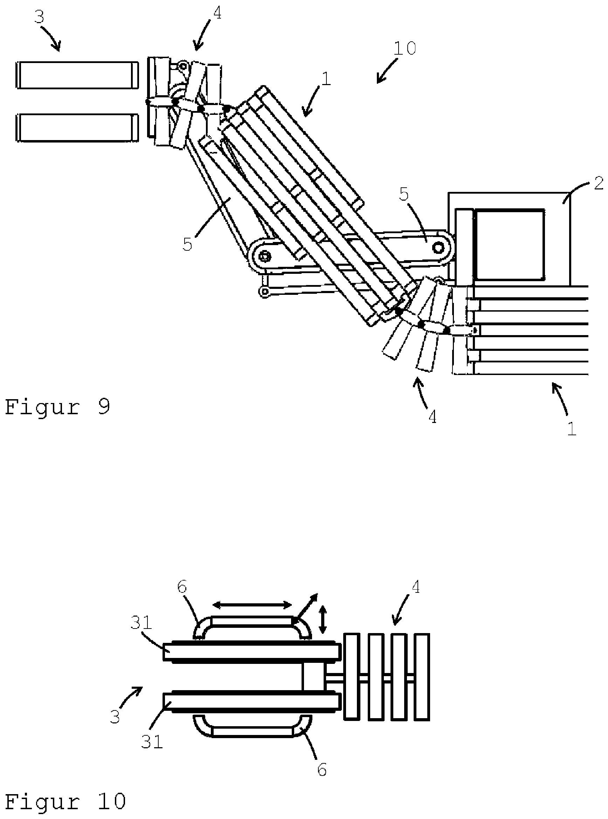

Die Fig. 7 und 8 zeigen eine Situation, in welcher die Förderbandeinrichtung 1 hinter dem Aufwälzmodul 3 in einer zusammengeschobenen Position ist, d. h. in einem in der Länge verkürzten Zustand. Durch ein Verstellen des Winkelarms 5 werden die Antriebswalzen 12 automatisch gegeneinander verschoben, so dass die Förderbänder 11 teleskopförmig ineinandergeschoben werden. Damit ist die Förderbandeinrichtung 1 eine Art direkt nachgeführte Förderbandeinrichtung, die immer der Position des vorderen Aufwälzmoduls 3 und des Kurvenmoduls 4 automatisch nachfolgt. Dagegen zeigt die Fig. 9 eine Situation, in welcher die Förderbänder 11 der Förderbandeinrichtung 1 teleskopartig auseinandergezogen sind, so dass die Transportstrecke der Förderbandeinrichtung 1 verlängert ist. In jeder Situation wird jedoch ein effektiver Weitertransport von Stückgut auf der Förderbandeinrichtung 1 durch die umlaufenden Förderbänder 11 und die rotierenden Antriebswalzen 12 gewährleistet. Zur Betätigung und Verstellung der Fördereinrichtung 10 kann eine zentrale Steuerung vorgesehen sein. Mittels der zentralen Steuerung werden die Höhenverstellung der Hubsäule der Halterung 2 und die Verstellung des Winkelarms 5 betätigt, so dass das vordere Aufwälzmodul 3 in quasi jede beliebige räumliche Position innerhalb der Verstellmöglichkeiten der Fördereinrichtung 10 verstellt werden kann. Auch kann mit der zentralen Steuerung die Geschwindigkeit der Förderbänder 11, der Förderbandeinrichtung 1, der angetriebenen Walzen 41, 42 der Kurvenmodule 4 und der einzeln ansteuerbaren Bandrampen 31 des Aufwälzmoduls 3 jeweils bei Bedarf geändert werden. Anstatt einer Hubsäule als Halterung 2 kann eine andere Halterung vorgesehen werden. Die Halterung 2 kann sowohl stationär als auch mobil ausgebildet sein. Beispielsweise können in drei Richtungen ansteuerbare Achsen vorgesehen werden, mittels welcher die Fördereinrichtung 10 in der X-Achse, der Y-Achse und der Z-Achse beliebig verstellbar ist.

In der Fig. 10 ist ein Beispiel einer Griffsteuerung an dem Aufwälzmodul 3 schematisch dargestellt. Seitlich von den beiden parallel verlaufenden Bandrampen 31 sind jeweils als Haltegriffe ausgebildete Griffsteuerungen 6 vorgesehen. Die Griffsteuerungen 6 sind mit dem Winkelarm, der beispielsweise als ein Hydraulikarm ausgestaltet sein kann, gekoppelt, so dass an den Griffsteuerungen 6 angelegte Kräfte eine Verstellung des Aufwälzmoduls 3 in die jeweils gewünschte Position verursachen. Dies ist in der Fig. 10 mit den dort eingezeichneten Pfeilen veranschaulicht. Erfindungsgemäß kann auch eine Fernbedienung vorgesehen werden, über welche sämtliche Verstellungen und Betätigungen der Fördereinrichtung 10 gesteuert werden können. Auf diese Weise kann sich eine Bedienperson frei bewegen, ohne direkt an der Fördereinrichtung 10 bleiben zu müssen. Die Förderbandeinrichtungen 1 können anstatt mit umlaufenden angetriebenen Förderbändern 11 ebenfalls mit angetriebenen Walzen oder einer Kombination von Walzen und Bändern ausgebildet sein. An dem vorderen endseitigen Aufwälzmodul 3 können zusätzliche Aufnahmehilfsmittel vorgesehen werden. Beispielsweise kann am stirnseitigen vorderen Ende der Bandrampen 31 eine rotierende Aufnahmewalze oder Trennwalze vorhanden sein. Außerdem können ergänzend oder alternativ vorragende Schippen oder Gabelelemente an dem Aufwälzmodul vorgesehen sein. Dies erleichtert weiter die automatische Aufnahme des Stückguts durch das Aufwälzmodul 3. Mittels der Kurvenmodule 4 ist bei dem gezeigten Ausführungsbeispiel die Transportrichtung in einer horizontalen Ebene verstellbar, indem die Walzen 41, 42 gegeneinander verkippt werden, wie es beispielsweise in den Fig. 8 und 9 gezeigt ist. Zusätzlich können die Walzen 41, 42 der Kurvenmodule 4 auch in vertikaler Richtung verkippbar ausgestaltet sein. Oder sie können aus der Horizontalen heraus schräg verstellbar sein, um einen Höhenversatz zu realisieren. Auf diese Weise lassen sich weitere Freiheitsgrade in der Bewegung und Verstellung der mit der Fördereinrichtung 10 gebildeten Transportstrecke realisieren.

Mit der erfindungsgemäßen Fördereinrichtung 10 werden nicht nur die Aufnahme und die Ablage von unterschiedlich großen, unterschiedlich schweren und unterschiedlich geformten Stückgütern erleichtert. Die direkt anschließende Förderbandeinrichtung 1 mit der Möglichkeit einer Längenverstellung ist direkt mitgeführt zu der jeweiligen Position des Aufwälzmoduls 3. Auf diese Weise erfolgen der Greifprozess und der Weitertransport in einem kontinuierlichen Vorgang, so dass sehr hohe Pickzahlen mit der Fördereinrichtung 10 realisiert werden können. Das heißt, es können größere Stückzahlen pro Zeiteinheit mit der Fördereinrichtung 10 umgeschlagen werden, und zwar dies unabhängig von der Geometrie und beispielsweise Steifigkeit der zu befördernden Objekte und Gegenstände. Die erfindungsgemäße Fördereinrichtung ist daher speziell ausgebildet und vorteilhaft einsetzbar im Bereich der Gepäcklogistik, aber auch im Bereich der Handhabung von Paketen und Päckchen. Als Stellantriebe für die Verstellung des Winkelarms 5 und die Höhenverstellung können beispielsweise hydraulische Stellantriebe aus dem Bereich der Automatisierung und Robotik verwendet werden.

## Patentansprüche

1. Fördereinrichtung (10) zum Beladen oder Entladen von vereinzelbarem Stückgut aus einem Lagerbereich heraus oder in einen Lagerbereich herein mit mindestens einer Förderbandeinrichtung (1), welche an einer Halterung (2) montiert ist, und mit einem Aufwälzmodul (3) zur Aufnahme und Ablage von Stückgut, wobei das Aufwälzmodul (3) an einem vorderen freien Ende der Fördereinrichtung (10) angeordnet ist, und wobei zwischen dem Aufwälzmodul (3) und der Förderbandeinrichtung (1) ein Kurvenmodul (4) vorgesehen ist, mit welchem eine Richtungsänderung einer Transportrichtung mindestens in der horizontalen Ebene variabel einstellbar ist, **dadurch gekennzeichnet, dass** das Aufwälzmodul (3) mindestens zwei parallel zueinander verlaufende Bandrampen (31) aufweist,
wobei die Bandrampen (31) separat derart ansteuerbar sind, dass die Geschwindigkeiten der Bandrampen (31) unterschiedlich einstellbar sind.

2. Fördereinrichtung (10) nach Anspruch 1, **dadurch gekennzeichnet, dass** das Aufwälzmodul (3) über Stellantriebe in beliebige räumliche Positionen in vertikaler sowie in horizontaler Richtung bewegbar ausgebildet und angeordnet ist.

3. Fördereinrichtung (10) nach Anspruch 1 oder 2, **dadurch gekennzeichnet, dass** das Aufwälzmodul (3), das Kurvenmodul (4) und die Förderbandeinrichtung (1) direkt aneinander angrenzend positioniert sind, so dass das Stückgut jeweils übergangslos zwischen ihnen weitertransportiert werden kann.

4. Fördereinrichtung (10) nach einem der vorhergehenden Ansprüche, **dadurch gekennzeichnet, dass** ein erstes Kurvenmodul (4) zwischen dem Aufwälzmodul (3) und der Förderbandeinrichtung (1) sowie ein zweites Kurvenmodul (4) zwischen der Förderbandeinrichtung (1) und einer zweiten Förderbandeinrichtung (1) vorgesehen ist.

5. Fördereinrichtung (10) nach einem der vorhergehenden Ansprüche, **dadurch gekennzeichnet, dass** die Förderbandeinrichtung (1) aus mehreren parallel verlaufenden, in ihrer relativen Lage zueinander entlang ihrer Erstreckungsrichtung veränderbaren Förderbändern (11) derart gebildet ist, dass eine Länge einer von den Förderbändern aufgespannten Transportfläche variabel einstellbar ist.

6. Fördereinrichtung (10) nach einem der vorhergehenden Ansprüche, **dadurch gekennzeichnet, dass** Mittel zur Höhenverstellung der Förderbandeinrichtung (1) und/oder des Aufwälzmoduls (3) vorgesehen sind.

7. Fördereinrichtung (10) nach einem der vorhergehenden Ansprüche, **dadurch gekennzeichnet, dass** Mittel zur Änderung einer Transportrichtung sowohl in einer horizontalen Ebene als auch in einer vertikalen Ebene vorgesehen sind.

8. Fördereinrichtung (10) nach einem der vorhergehenden Ansprüche, **dadurch gekennzeichnet, dass** das Kurvenmodul (4) und/oder die Förderbandeinrichtung (1) jeweils mit mindestens zwei parallel zueinander verlaufenden Förderelementen ausgebildet sind, welche separat ansteuerbar sind.

9. Fördereinrichtung (10) nach einem der vorhergehenden Ansprüche, **dadurch gekennzeichnet, dass** das Aufwälzmodul (3) mittels einer Stelleinrichtung angekoppelt ist, über welche es in mindestens zwei Richtungen gesteuert bewegbar ist.

10. Fördereinrichtung (10) nach einem der vorhergehenden Ansprüche, **dadurch gekennzeichnet, dass** das Kurvenmodul (4) mehrere in Transportrichtung hintereinanderliegende Walzen (41, 42) aufweist, welche relativ zueinander verkippbar sind.

11. Fördereinrichtung (10) nach dem vorherigen Anspruch, **dadurch gekennzeichnet, dass** die Walzen (41, 42) aktiv antreibbar sind, insbesondere unabhängig voneinander aktiv antreibbar sind.

12. Fördereinrichtung (10) nach einem der vorhergehenden Ansprüche, **dadurch gekennzeichnet, dass** das Aufwälzmodul (3) an seinem vorderen freien Ende mit zusätzlichen Aufnahmehilfsmitteln, insbesondere in der Form von einer verschiebbaren Schippe, einer angetriebenen Trennwalze oder ähnlichem, versehen ist.

13. Fördereinrichtung (10) nach einem der vorhergehenden Ansprüche, **dadurch gekennzeichnet, dass** eine Steuerung zur Positionssteuerung des Aufwälzmoduls (3) und zur Lage- und Ausrichtungssteuerung des Kurvenmoduls (4) und der Förderbandeinrichtung (1) vorgesehen ist.

14. Fördereinrichtung (10) nach Anspruch 13, **dadurch gekennzeichnet, dass** die Steuerung eine dreidimensional wirkende Griffsteuerung mit einer Admittanzregelung ist.

15. Fördereinrichtung (10) nach Anspruch 13 oder 14, **dadurch gekennzeichnet, dass** eine Positionssteuerung des Aufwälzmoduls in den drei Raumrichtungen einer X-Achse, Y-Achse und Z-Achse vorgesehen ist.

## Claims

1. Conveyor device (10) for the loading or unloading of separable piece goods from a storage area or to a storage area with at least one conveyor belt mechanism (1), which is mounted on a bracket (2), and with a roll-on module (3) for receiving and setting down the piece goods, wherein the roll-on module (3) is arranged at a front fee end of the conveyor device (10), and wherein a curve module (4) is provided between the roll-on module (3) and the conveyor belt mechanism (1), with which a change of direction of a transport direction is variably adjustable at least in the horizontal plane, **characterized in that** the roll-on module (3) comprises at least two belt ramps (31) running parallel to each other, wherein the belt ramps (31) can be controlled separately so that the velocities of the belt ramps (31) can be adjusted differently.

2. Conveyor device (10) according to claim 1, **characterized in that** the roll-on module (3) is designed and arranged to be movable via servo-drives in any given spatial positions in the vertical or horizontal direction.

3. Conveyor device (10) according to claim 1 or 2, **characterized in that** the roll-on module (3), the curve module (4) and the conveyor belt mechanism (1) are positioned directly adjacent to each other, so that the piece good can be transported between them with no transition segment.

4. Conveyor device (10) according to one of the preceding claims, **characterized in that** a first curve module (4) is provided between the roll-on module (3) and the conveyor belt mechanism (1), and a second curve module (4) is provided between the conveyor belt mechanism (1) and a second conveyor belt mechanism (1).

5. Conveyor device (10) according to one of the preceding claims, **characterized in that** the conveyor belt mechanism (1) is formed from several parallel running conveyor belts (11) which can change their position along their lengthwise direction relative to each other, so that the length of the transport surface spanned by the conveyor belts can be variably adjusted.

6. Conveyor device (10) according to one of the preceding claims, **characterized in that** means for height adjustment of the conveyor belt mechanism (1) and/or the roll-on module (3) are provided.

7. Conveyor device (10) according to one of the preceding claims, **characterized in that** means are provided for changing a transport direction in both a horizontal plane and in a vertical plane.

8. Conveyor device (10) according to one of the preceding claims, **characterized in that** the curve module (4) and/or the conveyor belt mechanism (1) are each configured with at least two parallel running conveyor elements which can be controlled separately.

9. Conveyor device (10) according to one of the preceding claims, **characterized in that** the roll-on module (3) is connected by means of a servo-mechanism, by which it can be moved in at least two directions.

10. Conveyor device (10) according to one of the preceding claims, **characterized in that** the curve module (4) has several rollers (41, 42) which are arranged one after another along the transport direction, which rollers (41, 42) can be tilted relative to each other.

11. Conveyor device (10) according to the preceding claim, **characterized in that** the rollers (41, 42) can be driven actively, in particular, driven actively and independently of each other.

12. Conveyor device (10) according to one of the preceding claims, **characterized in that** the roll-on module (3) is provided at it front free end with additional receiving means, especially in the form of a movable scoop, a driven separating roller or the like.

13. Conveyor device (10) according to one of the preceding claims, **characterized in that** a control unit is provided for a position control of the roll-on module (3) and for control of the position and orientation of the curve module (4) and the conveyor belt mechanism (1).

14. Conveyor device (10) according to claim 13, **characterized in that** the control unit is a grip control acting in three dimensions with an admittance regulation.

15. Conveyor device (10) according to claim 13 or 14, **characterized in that** a position control of the roll-on module is provided in the three spatial directions of an x axis, y axis and z axis.

## Revendications

1. Système de transport (10) servant à charger des marchandises au détail individualisables dans une zone de stockage ou à les en décharger, comprenant au moins un système de bandes transporteuses (1), lequel est monté sur un support (2), et un module élévateur (3) servant à recevoir et à déposer des marchandises au détail, le module élévateur (3) étant agencé à une extrémité avant libre du système transporteur (10), et un module de virage (4), au moyen duquel un changement d'un sens de transport au moins dans le plan horizontal est réglable de manière variable, étant disposé entre le module élévateur (3) et le système de bandes transporteuses (1), **caractérisé en ce que** le module élévateur (3) comprend au moins deux rampes à bande (31) s'étendant parallèlement l'une à l'autre, les rampes à bande (31) pouvant être commandées séparément, de telle manière que les vitesses des rampes à bande (31) peuvent être réglées différemment.

2. Système de transport (10) selon la revendication 1, **caractérisé en ce que** le module élévateur (3) est conçu et agencé de manière à pouvoir se déplacer dans le sens vertical et horizontal, dans des positions spatiales quelconques, par l'intermédiaire de mécanismes de commande.

3. Système de transport (10) selon la revendication 1 ou 2, **caractérisé en ce que** le module élévateur (3), le module de virage (4) et le système transporteur (1) sont positionnés de manière à être directement adjacents les uns aux autres, de sorte que les marchandises au détail peuvent continuer d'être transportées dans chaque cas sans transition entre ces derniers.

4. Système de transport (10) selon l'une quelconque des revendications précédentes, **caractérisé en ce qu'**un premier module de virage (4) est situé entre le module élévateur (3) et le système de bandes transporteuses (1) et un deuxième module de virage (4) est situé entre le système de bandes transporteuses (1) et un deuxième système de bandes transporteuses (1).

5. Système de transport (10) selon l'une quelconque des revendications précédentes, **caractérisé en ce que** le système de bandes transporteuses (1) est composé de plusieurs bandes transporteuses (11) s'étendant parallèlement, et dont la position relative les unes par rapport aux autres le long de leur direction d'extension est variable, de telle manière qu'une longueur d'une surface de transport couverte par les bandes transporteuses est réglable de manière variable.

6. Système de transport (10) selon l'une quelconque des revendications précédentes, **caractérisé en ce que** des moyens de réglage en hauteur du système de bandes transporteuses (1) et/ou du module élévateur (3) sont prévus.

7. Système de transport (10) selon l'une quelconque des revendications précédentes, **caractérisé en ce que** des moyens de modification d'un sens de transport aussi bien dans un plan horizontal que dans un plan vertical sont prévus.

8. Système de transport (10) selon l'une quelconque des revendications précédentes, **caractérisé en ce que** le module de virage (4) et/ou le système de bandes transporteuses (1) sont pourvus chacun d'au moins deux éléments transporteurs s'étendant parallèlement l'un à l'autre, lesquels peuvent être commandés séparément.

9. Système de transport (10) selon l'une quelconque des revendications précédentes, **caractérisé en ce que** le module élévateur (3) est accouplé au moyen d'un système de commande, par l'intermédiaire duquel il peut être déplacé dans au moins deux sens de façon commandée.

10. Système de transport (10) selon l'une quelconque des revendications précédentes, **caractérisé en ce que** le module de virage (4) comprend plusieurs rouleaux (41, 42) situés les uns derrière les autres dans le sens de transport, lesquels peuvent être inclinés les uns par rapport aux autres.

11. Système de transport (10) selon l'une quelconque des revendications précédentes, **caractérisé en ce que** les rouleaux (41, 42) peuvent être entraînés de manière active, et peuvent en particulier être entraînés de manière active indépendamment les uns des autres.

12. Système de transport (10) selon l'une quelconque des revendications précédentes, **caractérisé en ce que** le module élévateur (3) est pourvu à son extrémité avant libre de moyens auxiliaires de réception supplémentaires, en particulier sous la forme d'une pelle mobile, d'un rouleau de séparation entraîné ou similaire.

13. Système de transport (10) selon l'une quelconque des revendications précédentes, **caractérisé en ce qu'**une commande permettant de commander la position du module élévateur (3) et de commander la position et l'orientation du module de virage (4) et du système de bandes transporteuses (1) est présente.

14. Système de transport (10) selon la revendication 13, **caractérisé en ce que** la commande est une commande de préhension agissant de manière tridimensionnelle et pourvue d'une régulation d'admittance.

15. Système de transport (10) selon la revendication 13 ou 14, **caractérisé en ce qu'**une commande de la position du module élévateur dans les trois directions spatiales d'un axe X, d'un axe Y et d'un axe Z est prévue.
